# EUROPEAN PATENT SPECIFICATION

(11) **EP 1 559 313 B1**
(45) Date of publication and mention of the grant of the patent: **04.03.2009**
(21) Application number: 05076028.9
(22) Date of filing: 08.08.1997
(51) Int. Cl.: A01J 5/017

(54) **A method of and an implement for automatically connecting teat cups to the teats of an animal to be milked**
Verfahren und Vorrichtung zum automatischen Verbinden von Melkbechern zu der Zitze eines zu melkenden Tieres
Méthode et appareil de connection automatique de gobelets trayeurs aux pis d'un animal à traire

(30) Priority: 16.08.1996 EP 96202302
(43) Date of publication of application: 03.08.2005
(62) Divisional of application: 97202454.1
(73) Proprietor: MAASLAND N.V., 3147 PA Maassluis (NL)
(72) Inventor: van den Berg, Karel, 2971 BR Bleskensgraaf (NL)
(74) Representative: Corten, Maurice Jean F.M.

(56) References cited:
- EP-A- 0 360 354
- EP-A- 0 611 004
- US-A- 4 223 635

## Description

The invention relates to a method of automatically connecting a teat cup to a teat of an animal to be milked.

When a teat cup is seized by means of connecting means and is connected to a teat, the problem may arise that, after the teat cup has been connected to the teat and the connecting means have released the teat cup, the animal is frightened thereby and will move forward in a shock reaction; then, the connecting means form an obstacle for the teat cup, resulting in that the teat cup is pushed from the teat by the connecting means.

The invention aims at a method in which the above-mentioned drawback does not occur or at least is limited to a considerable extent.

In accordance with the invention, this is achieved by means of a method of automatically connecting a teat cup to a teat of an animal to be milked, in which method the teat cup is seized by means of connecting means and is subsequently connected to the teat and in which, after at least part of the teat has been introduced into the teat cup, the connecting means are moved in a vertical and in a horizontal direction, consecutively or simultaneously, in a direction opposite to the direction in which the connecting means are moved when they are connected to the teat cup, and in which the connecting means are disconnected automatically from the teat cup when the latter has been connected or has almost been connected to the teat. By moving the connecting means in a direction away from the teat cup, the connecting means no longer constitute an obstacle for the teat cup. In this manner the connecting means are prevented from pushing the teat cup from the teat.

In accordance with a further inventive feature, the connecting means are disconnected from the teat cup when a specific period of time has elapsed after the teat has penetrated into the opening of the teat cup.

According to again an other aspect of the invention, the connecting means are disconnected from the teat cup after a specific threshold value of the vacuum level measured in the teat cup has been exceeded.

The invention furthermore relates to an implement for applying a method as mentioned above, the implement comprising a milking robot for automatically connecting teat cups to the teats of an animal, respectively disconnecting same therefrom. According to an inventive feature, the implement comprises a computer and an animal identification system in which the position of the teat and the angle formed by a teat relative to a vertical plane and/or the shape of the teat are recorded per animal. According to again an other inventive feature, the milking robot comprises a sensor, such as a laser. Additionally it is possible, according to again an other aspect of the invention, to provide the milking robot with a camera and picture recognition means, as well as a telemeter.

In accordance with an inventive feature, a teat cup is provided with a vacuum sensor which is capable of measuring differences in pressure during the connection of the teat cup.

For a better understanding of the invention, reference will now be made to the accompanying drawings, in which:
Figure 1 shows a side view of the implement according to the invention;
Figure 2 shows a plan view of the implement of Figure 1;
Figure 3 shows more in detail how the position of the teat and the angle formed by the teat relative to a vertical plane are determined by means of a laser;
Figure 4 shows a teat cup that is moved upwards vertically to an oblique teat, so that an incorrect connection takes place;
Figure 5 shows step by step how the teat cup is connected to an oblique teat in a correct manner according to the invention.

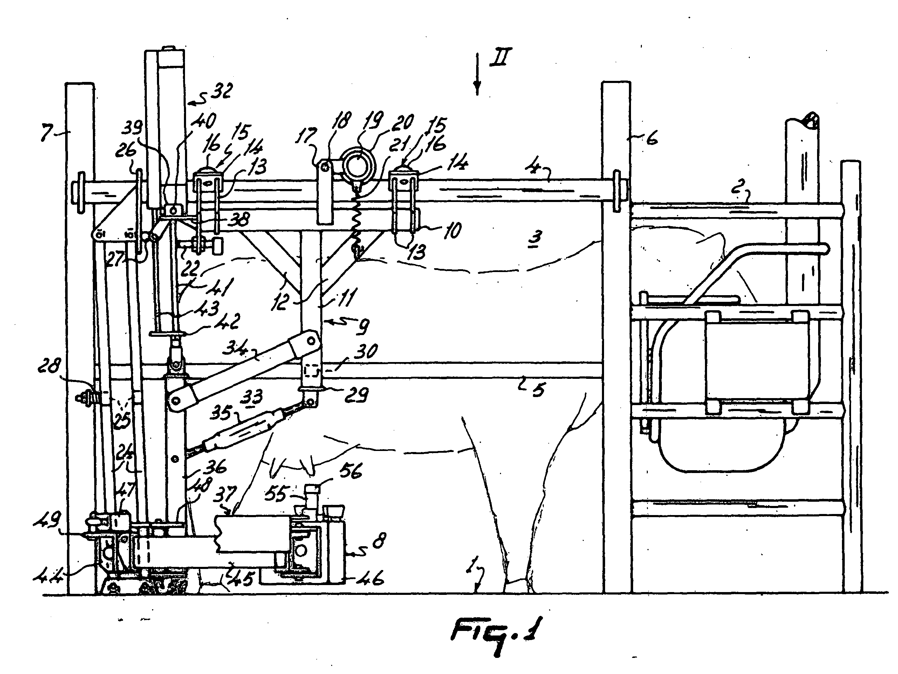

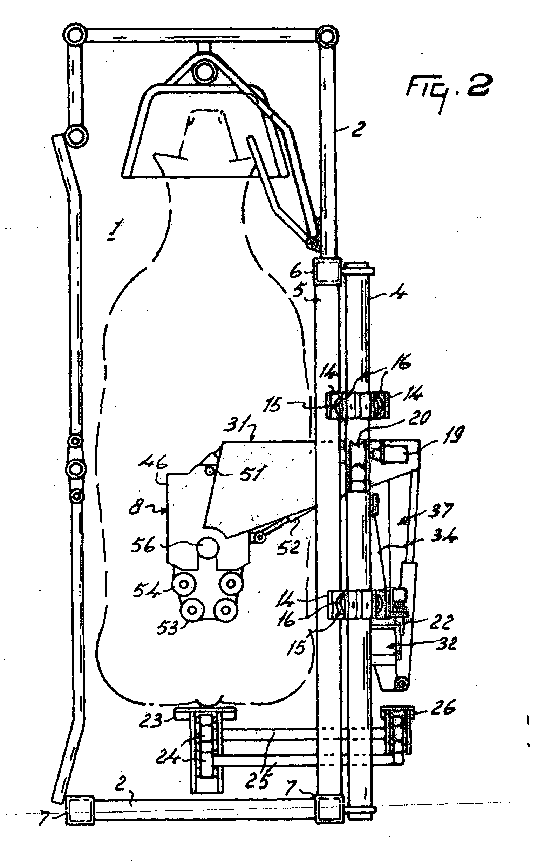

The implement shown in Figures 1 and 2 comprises a milk box 1 surrounded by a fencing 2 allowing the animal a limited freedom of movement. The animal can enter the milk box via a longitudinal side near the rear thereof and leave same via the same longitudinal side near the front thereof. The front side of the milk box being provided with a feeding installation, the cow will advance sufficiently far and will come into a position in which she can be milked easily. At the other longitudinal side of the milk box, being opposite to the one including the entrance and exit, there is provided a fixed frame 3 constituting part of the fencing 2, which frame 3 includes a first frame portion 4 and a second frame portion 5. The first frame portion 4 extends parallel to the second frame portion 5 and is situated substantially thereabove. The first frame portion 4 is fixed to the outside of two vertical stands 6 and 7 constituting part of the fencing 2, while the second frame portion 5 is fixed therebetween. To the first frame portion 4, there is movably attached a milking robot 8 for automatically milking animals, while this milking robot is supported against the second frame portion 5, which is disposed at such a height that the arms of the milking robot 8 are movable therebelow under the cow present in the milk box. The milking robot 8 comprises a carrier frame 9 for its further parts. By designing the upper frame portion 4 as a rail, the carrier frame 9, and consequently the entire milking robot 8, can easily be moved along this frame portion. The carrier frame 9 includes a beam 10 extending substantially parallel to the first frame portion 4, a beam 11 directed vertically downwardly perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a roller pair 15, the arrangement being such that the carrier frame 9 is suspended easily movably along the upper frame portion 4, therebelow. On the beam 10 of the carrier frame 9, on both sides, there are provided two carriers 17, to which there is movably attached a motor 19 about a pivot shaft 18. By this motor 19 there is driven a roller 20, preferably having a rubber surface, which roller is pushed against the upper frame portion 4 by means of a spring member 21. The spring member 21 being active between the motor 19 and the carrier frame 9, the roller 20 to be driven by the motor 19 is kept pushed against the upper frame portion 4, so that, when the motor is driven, it will be moved along the upper frame portion 4 and, consequently, the entire carrier frame 9 will be moved. To the supporting member 13 which, relative to the milk box, is situated rearmost, there is attached a sensor 22 comprising e.g. a laser. By means of this sensor 22, it is possible to guide the milking robot, in the longitudinal direction of the milk box, from an inoperative position to a starting position, in which the milking robot arms are moved under the animal present in the milk box, and to follow the movements of the animal in the longitudinal direction thereof. For this purpose, the sensor 22 cooperates with a supporting member 23 which is movable against the rear side of the animal. By means of a rod system which, in the present embodiment, is constituted by a quadrangle construction and, in particular, by a parallelogram construction 24, this supporting member 23 is arranged on the milk box floor pivotably relative thereto. By means of two rods 25, the supporting member 23 is provided with a plate 26, extending sidewards outside the frame portions 4, 5, which plate 26 is arranged so as to be able to reflect a signal transmitted by the sensor 22. After the sensor 22 has picked up the reflected signal, it will supply a control signal which is a measure for the actual, i.e. measured, distance between the plate 26 and the sensor 22, by means of which control signal the motor 19 can be operated, while the milking robot 8 is guided in the longitudinal direction of the milk box in such a way that the distance between the plate 26 and the sensor 22 is brought, respectively maintained, at a preset value. In its inoperative position, the milking robot 8 has been moved as rearwardly as possible relative to the frame portions 4 and 5, while pressing, by means of a contact element 27, against the plate 26 and thus keeping the supporting member 23 in its rearmost position. In other words, the supporting member 23 is locked by the milking robot 8 when the latter is in its inoperative position. When, in the longitudinal direction of the milk box, the milking robot is guided from this inoperative position to the starting position in which its arms are moved under the animal present in the milk box, then the supporting member 23 is dislocked and, by means of a spring disposed between the parallelogram construction 24 and the fencing 2, is pushed under spring pressure against the rear side of the relevant animal. Upon a forward or backward movement of the cow, under pressure of the spring 28, the supporting member 23 will always be kept against the rear side of the animal, so that the position of the plate 26 determines that of the animal in the longitudinal direction of the milk box and, by means of the sensor 22, while maintaining the distance in longitudinal direction between the plate 26 and the sensor 22, the milking robot can follow the movements of the cow in the longitudinal direction of the milk box. In the present embodiment, the beam 11 of the carrier frame 9 extends vertically downwardly to somewhat below the second frame portion 5. At the lower side of this beam 11, there is disposed a horizontal, rearwardly extending strip 29 which is provided with a freely rotatable roller element 30. The lower frame portion 5 is constituted by a rail, in particular one designed as a U-shaped beam, while the freely rotatable roller element 30 is arranged in such a way that it is movable between the two upright edges of the U-shaped beam. In this manner, the milking robot 8 is supported against the lower frame portion 5 and, when being moved by means of the motor over the first frame portion 4, can easily move along the second frame portion 5. Besides the carrier frame 9, the milking robot comprises a robot arm construction 31 which, by means of a control cylinder 32, is movable substantially vertically relative to the carrier frame 9. By means of a quadrangle construction 33, the robot arm construction 31 is movably connected with the carrier frame 9. In the embodiment shown, the upper arm 34 of this quadrangle construction 33 has a fixed length, while the lower arm 35 thereof is adjustable in length so as to enable the robot arm construction 31 to be adjusted to a limited extent. The robot arm construction 31 comprises a substantially vertical robot arm 36 as well as robot arms 37 that are movable in a substantially horizontal plane. By means of the quadrangle construction 33, the robot arm 36 is connected with the beam 11 of the carrier frame 9. The control cylinder 32 is active between the carrier frame 9 and the robot arm 36. As, by means of the lower arm 35 of the quadrangle construction 33, the orientation of the robot arm 36 is slightly adjustable, the spatial position of the action point of the control cylinder 32 at the robot arm 36 is not entirely fixed. For that reason, the housing of the control cylinder 32 is provided, at least pivotably to a limited extent, on a carrier plate 38 attached to the beam 10 of the carrier frame 9. On this carrier plate 38 there are disposed supports 39, wherebetween the housing of the control cylinder 32 is capable of being moved about a pivot shaft 40. In the present embodiment, the control cylinder is designed as a servo-pneumatic positioning cylinder. This means that, at the lower end of the piston rod 41, by means of a plate 42 fixed thereto, there is attached a position feedback rod 43, by means of which, in the part of the control cylinder, a potentiometer will deduce a signal indicating the position of the piston rod relative to the cylinder housing, while, with the aid of the signal supplied by the potentiometer, the position of the piston rod 41 relative to the cylinder housing can be post-guided to a preset position. Furthermore, the control cylinder 32 is provided with an overload protection enabling the robot arm construction 31 to be moved into its lowest position, as soon as the animal present in the milk box exercises pressure thereon, e.g. by kicking.

As shown in Figure 2, the milking robot includes arms 44, 45 and 46. The arms 44 and 45 are arranged at a fixed angle of 90° relative to each other. Therefore, the latter arms are moved together, i.e. by a control cylinder 47 provided between a supporting plate 48 attached to the robot arm 36 and a connecting piece 49 disposed between the two arms 44 and 45. The two arms 44 and 45 are pivotable about a substantially vertical pivot shaft 50 between the supporting plate 48 and a supporting plate 48', the latter also being rigidly connected to the robot arm 36, more in particular at the lower end thereof. The arm 46 is pivotable relative to the arm 45 about a substantially vertical pivot shaft 51 and is pivoted relative thereto by means of a control cylinder 52 disposed between the arm 46 and the end of the arm 45 that is situated near the connecting piece 49. Near the end of the arm 46 there are provided the teat cups 53 and 54 to be connected to the teats of the cow (see Figure 1). Between the two teat cups 54 there is disposed a slide, which is movable on the arm 46 and on which there is provided a sensor 55, which by a sectorwise scanning movement can accurately determine the position of the teats and the angle formed by the teats relative to a vertical plane. The robot arms 44 to 46 having been brought to under the cow, they are in a relatively low position, in which the sensor 55 will not yet detect teats. By means of the control cylinder 32, the robot arms 44 to 46 are raised stepwise until the sensor 55 detects one or more teats of the animal. When, for some reason or another, during this upward movement of the robot arms 44 to 46 have been raised to such an extent that the upper side of the sensor 55 pushes against the cow's abdomen, then, by means of a switch 56 provided on the upper side of the sensor 55, a downward movement of the robot arms can be effected, whereafter, by means of the sensor 55, while again stepwise raising the robot arms, the determination of the position of the teats can be repeated.

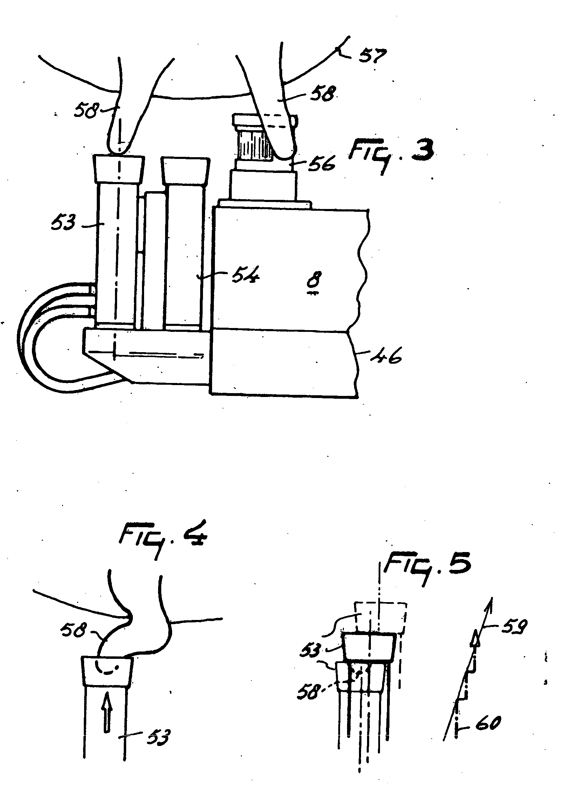

Figure 3 shows the arm 46 of the milking robot 8 in an enlarged view, as well as an udder 57 including teats 58 which are in an oblique position and consequently form an angle relative to a vertical plane. When the teat cup 53, after having been positioned such that its opening is located under the end of the teat 58, is connected to the teat 58 in a customary manner, i.e. exclusively by being moved upwards, then, as shown in Figure 4, said teat cup 53 will be connected incorrectly to the teat 58. In that case only a part of the end of the teat 58 will penetrate into the teat cup 53, whereafter, when the teat cup 53 is disconnected from the arm 46, the teat cup 53 will fall off the teat 58 because of its own weight.

In accordance with the invention, the teat cup 53 will therefore be connected in a manner in which it is brought into the positions shown in Figure 5. After the teat cup 53 has been positioned under the teat 58 as shown in Figure 3, it is moved upwards vertically to a small extent so as to reach the lowest position shown in Figure 5. The end of the teat 58 is then located in the teat cup 53. The teat cup 53 is subsequently moved in a horizontal plane, in this case to the right, and is then moved upwards again, whereafter it reaches the middle position shown in Figure 5. Then the teat cup is moved in a horizontal plane to the right and is thereafter moved upwards again so as to reach the upper position shown in Figure 5. According to the above described procedure, the teat cup 53 is subsequently connected to the teat 58 in a correct manner, i.e. the teat 58 will penetrate sufficiently far into the teat cup 53.

It is additionally possible to execute the upward movement and the sideward movement of the teat cup 53 each time quickly after each other in order to connect the teat cup 53 to the teat 58 in a more or less flowing movement. This flowing movement of the teat cup 53 is shown by the line 59 in Figure 5, whereas the gradual connection is shown by the line 60 in Figure 5.

## Claims

1. A method of automatically connecting a teat cup to a teat of an animal to be milked, in which method the teat cup is seized by means of connecting means and is subsequently connected to the teat and in which, after at least part of the teat has been introduced into the teat cup, the connecting means are moved in a vertical and in a horizontal direction, consecutively or simultaneously, in a direction opposite to the direction in which the connecting means are moved when they are connected to the teat cup, and in which the connecting means are disconnected automatically from the teat cup when the latter has been connected or has almost been connected to the teat.

2. A method as claimed in claim 1, **characterized in that** the connecting means are disconnected from the teat cup when a specific period of time has elapsed after the teat has penetrated into the opening of the teat cup.

3. A method as claimed in claim 1, **characterized in that** the connecting means are disconnected from the teat cup after a specific threshold value of the vacuum level measured in the teat cup has been exceeded.

4. An implement for applying a method as claimed in any one of the preceding claims, **characterized in that** the implement comprises a milking robot (8) for automatically connecting teat cups (53; 54) to the teats of an animal, respectively disconnecting same therefrom.

5. An implement as claimed in claim 4, **characterized in that** the implement comprises a computer and an animal identification system in which the position of the teat and the angle formed by a teat relative to a vertical plane and/or the shape of the teat are recorded per animal.

6. An implement as claimed in claim 4 or 5, **characterized in that** the milking robot (8) comprises a sensor (56), such as a laser.

7. An implement as claimed in claim 4 or 5, **characterized in that** the milking robot (8) comprises a camera and picture recognition means, as well as a telemeter.

8. An implement as claimed in any one of claims 4 to 7, **characterized in that** a teat cup (53; 54) is provided with a vacuum sensor which is capable of measuring differences in pressure during the connection of the teat cup.

## Patentansprüche

1. Verfahren zum automatischen Verbinden eines Zitzenbechers mit einer Zitze eines zu melkenden Tieres, wobei in dem Verfahren der Zitzenbecher durch Verbindungsmittel ergriffen und anschließend mit der Zitze verbunden wird und nachdem wenigstens ein Teil der Zitze in den Zitzenbecher eingeführt worden ist, die Verbindungsmittel aufeinanderfolgend oder gleichzeitig in eine vertikale und in eine horizontale Richtung bewegt werden, welche entgegengesetzt der Richtung ist, in welche die Verbindungsmittel bewegt werden, wenn sie mit dem Zitzenbecher in Verbindung stehen, und in welche die Verbindungsmittel vom Zitzenbecher automatisch abgezogen werden, wenn Letzterer mit der Zitze verbunden worden ist oder fast mit ihr verbunden worden ist.

2. Verfahren nach Anspruch 1,
**dadurch gekennzeichnet, dass** die Verbindungsmittel vom Zitzenbecher getrennt werden, wenn eine bestimmte Zeitperiode verstrichen ist, nachdem die Zitze in die Öffnung des Zitzenbechers eingedrungen ist.

3. Verfahren nach Anspruch 1,
**dadurch gekennzeichnet, dass** die Verbindungsmittel vom Zitzenbecher getrennt werden, nachdem ein bestimmter Schwellenwert des Vakuumniveaus, welcher im Zitzenbecher gemessen wird, überschritten worden ist.

4. Vorrichtung zur Durchführung eines Verfahrens nach einem der vorhergehenden Ansprüche,
**dadurch gekennzeichnet, dass** die Vorrichtung einen Melkroboter (8) zum automatischen Verbinden der Zitzenbecher (53; 54) mit den Zitzen eines Tieres beziehungsweise zum Abnehmen derselben von diesen umfasst.

5. Vorrichtung nach Anspruch 4,
**dadurch gekennzeichnet, dass** die Vorrichtung einen Computer und ein Tieridentifizierungssystem umfasst, in welchem die Position der Zitze und der Winkel, welchen die Zitze relativ zu einer vertikalen Ebene einnimmt, und/oder die Gestalt der Zitze für jedes Tier gespeichert sind.

6. Vorrichtung nach Anspruch 4 oder 5,
**dadurch gekennzeichnet, dass** der Melkroboter (8) einen Sensor (56) wie beispielsweise einen Laser umfasst.

7. Vorrichtung nach Anspruch 4 oder 5,
**dadurch gekennzeichnet, dass** der Melkroboter (8) eine Kamera und eine Bilderkennungsvorrichtung sowie einen Entfernungsmesser umfasst.

8. Vorrichtung nach einem der Ansprüche 4 bis 7,
**dadurch gekennzeichnet, dass** ein Zitzenbecher (53; 54) mit einem Vakuumsensor ausgestattet ist, welcher in der Lage ist, Druckunterschiede während des Anschließens des Zitzenbechers zu messen.

## Revendications

1. Procédé de connexion automatique d'un gobelet trayeur à un trayon d'un animal destiné à être trait, dans lequel le gobelet trayeur est saisi au moyen de moyens de connexion et est par la suite connecté au trayon et dans lequel, après qu'au moins une partie du trayon a été introduite dans le gobelet trayeur, les moyens de connexion sont déplacés dans une direction verticale et dans une direction horizontale, de façon consécutive ou simultanée, dans une direction opposée à la direction dans laquelle les moyens de connexion sont déplacés lorsqu'ils sont connectés au gobelet trayeur, et dans lequel les moyens de connexion sont déconnectés automatiquement du gobelet trayeur lorsque ce dernier a été connecté ou a presque été connecté au trayon.

2. Procédé selon la revendication 1, **caractérisé en ce que** les moyens de connexion sont déconnectés du gobelet trayeur lorsqu'une période spécifique s'est écoulée après que le trayon a pénétré dans l'ouverture du gobelet trayeur.

3. Procédé selon la revendication 1, **caractérisé en ce que** les moyens de connexion sont déconnectés du gobelet trayeur après qu'une valeur de seuil spécifique du niveau de dépression mesuré dans le gobelet trayeur a été dépassée.

4. Instrument destiné à appliquer un procédé selon l'une quelconque des revendications précédentes, **caractérisé en ce que** l'instrument comprend un robot de traite (8) destiné à connecter automatiquement des gobelets trayeurs (53 ; 54) aux trayons d'un animal, et respectivement à déconnecter ceux-ci desdits trayons.

5. Instrument selon la revendication 4, **caractérisé en ce que** l'instrument comprend un ordinateur et un système d'identification d'animal dans lequel la position du trayon et l'angle formé par un trayon par rapport à un plan vertical et/ou la forme du trayon sont enregistrés pour chaque animal.

6. Instrument selon la revendication 4 ou 5, **caractérisé en ce que** le robot de traite (8) comprend un capteur (56), tel qu'un laser.

7. Instrument selon la revendication 4 ou 5, **caractérisé en ce que** le robot de traite (8) comprend une caméra et des moyens de reconnaissance d'image, tels qu'un télémètre.

8. Instrument selon l'une quelconque des revendications 4 à 7, **caractérisé en ce qu'**un gobelet trayeur (53 ; 54) est pourvu d'un capteur de dépression qui est capable de mesurer des différences de pression au cours de la connexion du gobelet trayeur.
